# FASCICULE DE BREVET EUROPEEN

(11) **EP 3 084 591 B1**
(45) Date de publication et mention de la délivrance du brevet: **26.01.2022**
(21) Numéro de dépôt: 14828255.1
(22) Date de dépôt: 19.12.2014
(51) Int. Cl.: G06F 9/4401, G06F 13/10, G06F 9/455

(54) **ÉMULATION D'ÉQUIPEMENTS PHYSIQUES**
EMULATION VON PHYSIKALISCHER AUSRÜSTUNG
EMULATION OF PHYSICAL EQUIPMENT

(30) Priorité: 20.12.2013 FR 1363332
(43) Date de publication de la demande: 26.10.2016
(73) Titulaire: ORANGE, 92130 Issy-les-Moulineaux (FR)
(72) Inventeur: LE GUILLOU, Xavier, F-35410 Chateaugiron (FR); BRICHETEAU, Dimitri, F-35000 Rennes (FR); ROUL, Guillaume, F-35530 Noyal sur Vilaine (FR)
(86) Numéro de dépôt international: PCT/FR2014/053454
(87) Numéro de publication internationale: WO 2015/092319

(56) Documents cités:
- US-A1- 2008 320 501
- US-A1- 2008 320 501
- US-B1- 8 028 040
- WONHONG KWON ET AL: "Design and Implementation of Peripheral Sharing Mechanism on Pervasive Computing with Heterogeneous Environment", 7 mai 2007 (2007-05-07), SOFTWARE TECHNOLOGIES FOR EMBEDDED AND UBIQUITOUS SYSTEMS; [LECTURE NOTES IN COMPUTER SCIENCE], SPRINGER BERLIN HEIDELBERG, BERLIN, HEIDELBERG, PAGE(S) 537 - 546, XP019073228, ISBN: 978-3-540-75663-7 le document en entier
- WONHONG KWON ET AL: "Design and Implementation of Peripheral Sharing Mechanism on Pervasive Computing with Heterogeneous Environment", 7 May 2007 (2007-05-07), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP019073228, ISBN: 978-3-642-17318-9 * *

## Description

### Domaine technique

L'invention s'applique à tout terminal équipé d'une interface de communication pour un périphérique d'extension (périphérique de stockage, d'impression, de visualisation, etc.).

L'invention s'applique tout particulièrement à un système comportant un dispositif d'émulation local à un utilisateur, lui permettant d'accéder aux terminaux dont les interfaces de communication sont difficilement accessibles.

### Etat de la technique

Généralement, l'utilisation d'un terminal équipé d'une interface de communication se réalise en connectant directement, avec ou sans fil, l'équipement périphérique (par exemple un périphérique de stockage, d'impression, de visualisation, d'enregistrement, etc.) sur l'interface physique du terminal, par exemple au moyen d'une connexion filaire de type USB (de l'anglais *Universal Serial Bus*) ou d'une connexion sans fil de type WIFI, etc.

Mais certains terminaux sont parfois trop éloignés spatialement de l'utilisateur (ils se trouvent dans une autre pièce de la maison, dans un placard, dans un grenier, etc.)

De surcroît, certains terminaux, bien que potentiellement proches de l'utilisateur, ont des interfaces difficilement accessibles (parce que situées physiquement derrière le terminal, en dessous, au-dessus, etc.)

Pour remédier à ce problème, les protocoles bien connus de l'homme du métier sous l'appellation « USB sur IP » permettent d'encapsuler les signaux USB dans des trames TCP/IP et de les transmettre à un autre équipement dans un réseau Internet (IP).

Cependant, l'utilisation d'un tel protocole permet uniquement de déporter des interfaces de type USB, et suppose une association manuelle entre le terminal et l'interface physique.

Le document US 8028040 B1 propose une méthode et un système pour établir des connexions entre un système informatique hôte virtualisé et des interfaces de dispositif associées à des terminaux distants. Cependant, si les terminaux disposent de plusieurs interfaces physiques de types différents, un tel système ne permet pas d'accéder simplement à l'une des interfaces du terminal.

Il n'existe pas, aujourd'hui, de solution simple pour accéder automatiquement, à distance, aux interfaces de tels terminaux.

L'invention offre une solution ne présentant pas les inconvénients de l'état de la technique.

### L'invention

A cet effet, selon un aspect fonctionnel, l'invention a pour objet un procédé d'émulation d'une interface physique d'un dispositif apte à communiquer dans un réseau, ladite interface étant apte à recevoir au moins un équipement périphérique.

Un mode de réalisation est détaillé à l'appui de la revendication indépendante 1 et de ses dépendantes. D'autres modes de réalisation sont fournis à titre d'exemple.

Le procédé d'émulation offre l'avantage d'assurer une communication bidirectionnelle par échange de messages entre l'équipement périphérique et le terminal, quand bien même l'équipement périphérique n'est pas connecté directement au terminal mais à un autre équipement du réseau. Tout se passe dans ce cas comme si l'interface physique du dispositif d'émulation se trouvait sur le terminal. Par « interface physique », on entend ici la partie matérielle de l'interface (par exemple un connecteur) et l'ensemble des modules logiciels qui permettent de la gérer (aussi appelés pilotes, ou « drivers » en anglais). On peut, de cette manière, associer chacune des interfaces physiques du dispositif d'émulation à un ou plusieurs terminaux du réseau. Par exemple, le dispositif d'émulation, qui se trouve à proximité de l'utilisateur, peut comporter une interface USB et une interface SD sur laquelle viennent se connecter respectivement une clé USB et une carte d'appareil photographique numérique. La clé USB peut être associée à l'ordinateur personnel (PC) de l'utilisateur, qui se trouve dans sa chambre. La carte (SD) de l'appareil photo peut être associée au téléviseur, qui est dépourvu d'interface physique de ce type, et à la tablette de l'utilisateur. L'utilisateur peut ainsi, sans se déplacer, visualiser ses photographies sur son téléviseur et sur sa tablette, et transférer des fichiers depuis son PC comme si la clé USB lui était directement connectée.

De cette manière, les accès en lecture et écriture au périphérique peuvent se faire de manière distante : le procédé selon l'invention gère la communication de manière transparente pour l'utilisateur et le terminal en dirigeant (ou « routant » en langage informatique) les données de manière appropriée.

La pré-association permet d'associer un équipement à un ou plusieurs terminaux de manière temporaire. En effet, il peut être souhaitable qu'un périphérique, par exemple de stockage, puisse être associé tantôt à un terminal, tantôt à un autre, voire partagé entre plusieurs terminaux. Une telle étape de mise en correspondance préalable suivie d'une sélection effective de l'équipement terminal, par exemple via une interface proposée à l'utilisateur du terminal, permet une telle association dans le temps. L'étape de pré-association permet de réaliser une liste des associations possibles entre les terminaux, leurs interfaces virtuelles potentielles et les interfaces physiques disponibles sur le dispositif d'émulation. En effet, certaines associations n'ayant pas de sens physique (par exemple, associer une manette de jeu avec une interface de communication en champ proche (NFC) présente une combinaison irréaliste), il s'agit, dès la prise de connaissance des différents terminaux du réseau, de prévoir les bonnes associations. Ainsi, lorsque l'utilisateur connecte l'un de ses équipements périphériques (par exemple la manette de jeu) il obtiendra la liste des terminaux qui peuvent potentiellement y être associés, en l'occurrence le décodeur numérique de salon dont les services sont parfaitement appropriés à l'utilisation d'une manette de jeu.

Par la suite, une étape de sélection effective permet de choisir l'une des pré-associations. Tout se passe alors comme si le périphérique était directement connecté au terminal (ou aux terminaux) associé, par exemple la clé USB peut être associée au PC de l'utilisateur, puis à sa tablette, puis simultanément au PC et à la tablette.

Chacun des terminaux peut déclarer ses capacités au dispositif d'émulation, par exemple lorsque le terminal se connecte au réseau local. Le terminal peut notamment, lors de cette étape préalable, déclarer ses interfaces physique (type, nombre, capacités, etc.), les services qu'il offre (e.g. jeux vidéo avec manette de jeu) ainsi que son souhait éventuel de bénéficier d'autres interfaces dont il ne dispose pas de manière native : par exemple un téléviseur qui ne possède pas d'interface de type SD peut néanmoins avoir des besoins d'une telle interface virtuelle.

La définition de priorités peut permettre en outre d'offrir une qualité de service à l'utilisateur, en arbitrant les conflits potentiels entre les différents terminaux. Par exemple la priorité qui peut être affectée à certains d'entre eux peut permettre de résoudre des conflits dans le cas où une interface USB est partagée entre deux périphériques, l'accès étant donnée à celui qui a la priorité la plus élevée. Un tel mécanisme peut également permettre de partager avantageusement la répartition de la bande passante entre plusieurs terminaux et plusieurs ports physiques du dispositif.

Il est possible de ne pas imposer à l'utilisateur de sélectionner explicitement une association, notamment dans le cas où un équipement terminal est le seul d'un type donné : par exemple s'il n'y a qu'un seul PC connecté sur le réseau, il semble légitime de lui associer automatiquement la clé USB. Cette possibilité est également utile pour permettre à l'utilisateur de définir un comportement par défaut pour un périphérique donné (par exemple l'association automatique d'une manette de jeu au décodeur numérique de salon, qui est l'équipement le plus susceptible de supporter une telle association).

L'invention a aussi pour objet un procédé de gestion d'une interface logicielle sur un terminal apte à communiquer dans un réseau pour gérer une interface logicielle virtuelle qui le relie à une interface physique dans le réseau. Par la suite, lorsque l'interface logicielle est activée, c'est-à-dire qu'elle a été effectivement associée à une interface physique, tout se passe comme si le terminal dialoguait effectivement avec cette interface physique en local, l'interface logicielle prenant le rôle de cette interface physique de manière transparente pour le terminal.

Selon des aspects matériels, l'invention concerne également un dispositif d'émulation, un terminal, une passerelle de service, un système de communication et un programme d'ordinateur.

L'invention sera mieux comprise à la lecture de la description qui suit, donnée à titre d'exemple et faite en référence aux dessins annexés.

### Les figures:

La figure 1 représente un réseau local selon l'état de l'art.
La figure 2 présente l'application générale d'un mode de réalisation de l'invention dans un réseau local.
La figure 3 représente une architecture matérielle d'un dispositif selon l'invention connecté à un terminal du réseau local.
La figure 4 représente un mode de réalisation de l'invention.
La figure 5 représente un autre mode de réalisation de l'invention.
La figure 6 représente un chronogramme des échanges entre un dispositif et un terminal selon un mode de réalisation de l'invention.

### Description détaillée d'un exemple de réalisation illustrant l'invention

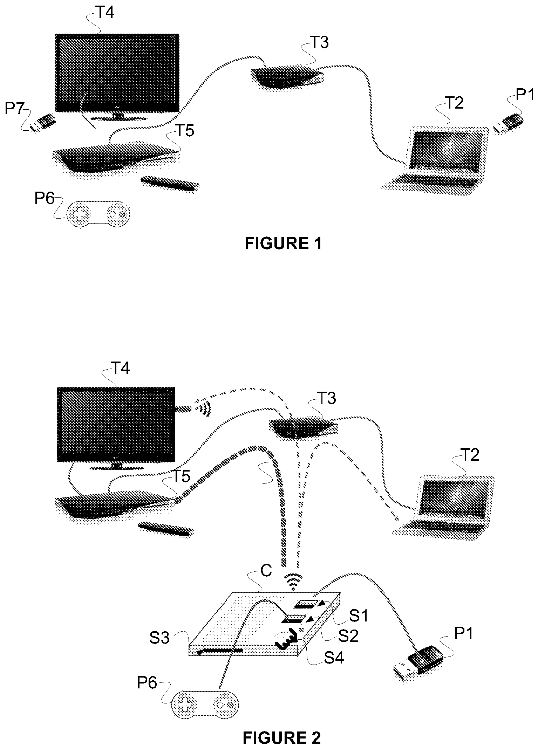

La figure 1 représente un réseau local selon l'état de l'art.

Le contexte du réseau local domestique est donné à titre d'exemple et pourrait être transposé aisément à celui d'un réseau d'entreprise ou d'un réseau Internet quelconque.

Classiquement, le réseau local comporte une passerelle de service (T3, BOX), dans cet exemple une passerelle domestique qui assure notamment le routage des données dans le réseau local, ainsi qu'entre le réseau large-bande (non représenté) et le réseau local.

Le réseau local comporte trois autres terminaux : un ordinateur personnel (T2, PC), un téléviseur (T4, TV) et un décodeur numérique de télévision (T5, STB).

Par la suite, on entend par équipement terminal, ou plus simplement terminal, tout dispositif apte à se connecter sur le réseau domestique (imprimante, dispositif de numérisation, tablette numérique, *smartphone,* disque dur, etc.) Classiquement, selon notre exemple, le téléviseur se trouve dans le salon, la passerelle domestique dans le bureau et l'ordinateur portable dans la chambre de l'utilisateur.

Dans un tel contexte, l'utilisateur qui souhaite récupérer un fichier sur sa clé USB doit monter dans la chambre pour brancher la clé au port USB de son PC ; il ne peut pas connecter son appareil photo numérique au téléviseur qui ne dispose pas de connectique appropriée (pas de lecteur de carte SD) ; il doit connecter obligatoirement sa manette de jeu à la STB qui peut être difficilement accessible ; il ne peut pas partager sa clé USB entre deux terminaux (tablette et PC, par exemple).

La figure 2 présente l'application générale d'un mode de réalisation de l'invention dans un réseau local, qui résout tous les problèmes évoqués ci-dessus.

Le contexte général de la figure 2 est identique à celui de la figure 1 mais selon l'invention, l'utilisateur s'est procuré un dispositif d'émulation (C) qu'il a posé à un endroit qui lui est facilement accessible, par exemple sur la table de son salon.

L'invention propose de simuler sur le réseau (dans notre cas, un réseau local de type IP mais alternativement le réseau peut être de type différent) la couche physique de divers périphériques. Cette simulation, ou émulation, ou encore « virtualisation », permet d'avoir accès à des périphériques externes au terminal, ces périphériques étant vus comme des périphériques locaux au terminal.

L'invention propose en d'autres termes d'effectuer un routage des données à partir d'un équipement serveur (ici, le dispositif d'émulation) possédant des interfaces physiques vers un ou plusieurs équipements terminaux dans le réseau (domestique ou large bande), en déportant ainsi les interfaces physiques.

Le dispositif d'émulation (C) de la figure 2 comporte un ensemble de ports physiques correspondant par exemple aux normes USB (de l'anglais « Universal Serial Bus », une norme pour les communications séries), SD (de l'anglais « Secure Digital »), NFC (de l'anglais « Near Field Communication » pour les communications en champ proche), SATA (de l'anglais «Serial ATA» pour la connexion de périphériques de stockage haut débit). Le dispositif possède un écran (non représenté) ou alternativement un écran déporté sur le téléviseur.

Sur l'exemple de la figure 2, le dispositif d'émulation comporte deux ports USB (S1, S2), une interface NFC (S4) et une interface SD (S3). Le dispositif d'émulation embarque également un ensemble de programmes selon l'invention, qui permettent d'assurer successivement la reconnaissance des terminaux, l'association des terminaux et des périphériques, puis le transfert des données entre les terminaux et périphériques associés.

Selon cet exemple, l'utilisateur connecte la clé USB et la manette de jeu sur deux ports USB du dispositif d'émulation puis associe la clé USB à deux terminaux (PC, TV) du réseau local et la manette de jeu au STB (T5).

Le TV (T4) est par ailleurs équipé d'un dispositif d'adaptation (*dongle*) Wifi/USB pour pouvoir échanger des données avec le dispositif d'émulation.

De manière générale, cette invention peut s'appliquer à n'importe quel terminal connecté au réseau local, au réseau large bande, ou via un adaptateur (dongle) WiFi / USB ou Ethernet / USB. Les terminaux peuvent être nativement compatibles ou rendus compatibles par l'installation d'un pilote spécifique.

Cette association peut se faire automatiquement, ou via une interface utilisateur proposée sur le dispositif.

Par la suite, tout se passe comme si la clé USB était connectée sur le PC (T2) et sur le TV (T4), et comme si la manette de jeu était connectée directement sur la STB (T5).

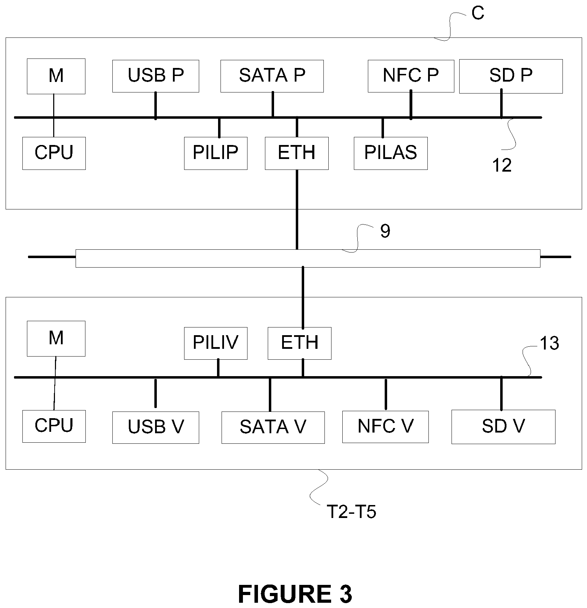

La figure 3 représente une architecture matérielle d'un dispositif selon l'invention (C) connecté à un terminal (T2-T5) du réseau local.

Le dispositif d'émulation (C) comprend classiquement des mémoires (M) associées à un processeur (CPU). Les mémoires peuvent être de type ROM (de l'anglais *Read Only Memory*) ou RAM (de l'anglais *Random Access Memory*) ou encore Flash. Le dispositif d'émulation (C) communique sur le réseau local (9) via le module ETH (Ethernet).

Conformément à la figure 2, Le dispositif comporte un ensemble d'interfaces physiques (S1-S4) correspondant aux normes USB (S1, S2), SD (S4), NFC (NFC P, S4). Chacune de ces interfaces est gérée par un logiciel de pilotage de l'interface physique (USB P, SD P, NFC P). Le dispositif comporte en outre une interface physique SATA, non représentée, gérée par un pilote « SATA P ».

Dans le contexte de cette demande, on appelle « interface physique » non seulement la matériel mais aussi l'ensemble des pilotes logiciels (en anglais « drivers ») qui permettent d'y accéder.

Tous les modules communiquent classiquement entre eux via un bus de données (12).

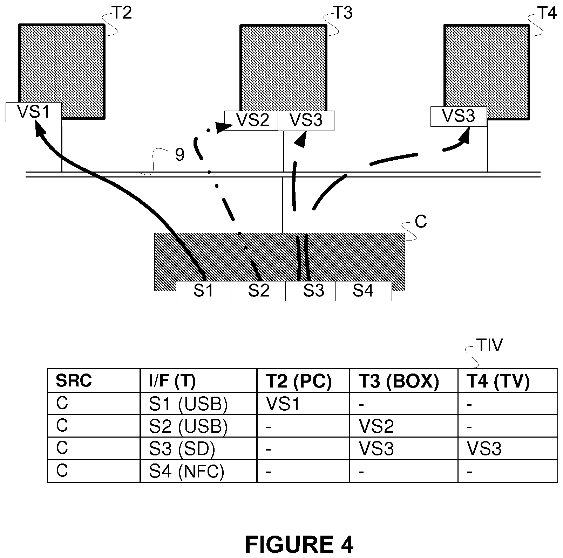

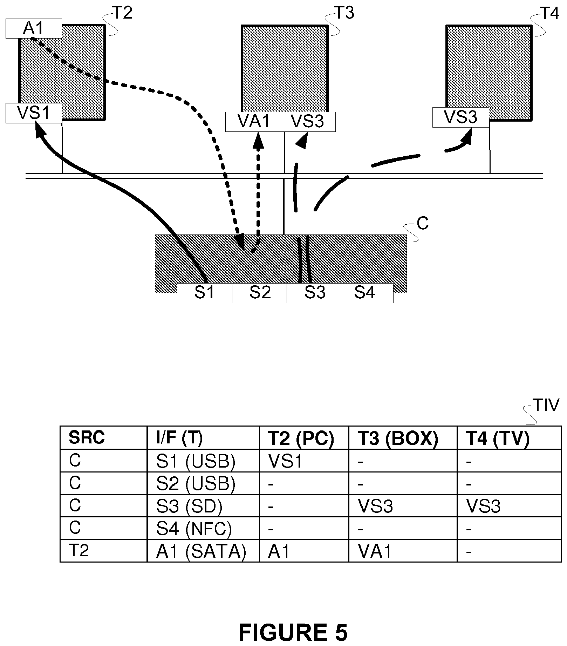

Le dispositif d'émulation (C) comporte aussi un module PILAS de PILotage des ASsociations, capable d'assurer l'association virtuelle d'une interface physique sur le dispositif d'émulation (C) avec une ou plusieurs interfaces logicielles, ou virtuelles (VS1-VS4), sur un terminal du réseau. Le module PILAS accède notamment à la mémoire du dispositif d'émulation (M) pour y créer, consulter et mettre à jour la table des associations (TIV) qui met en correspondance les interfaces physiques du dispositif d'émulation et les interfaces virtuelles des terminaux. Cette table sera décrite un peu plus tard à l'appui des figures 4 et 5. Le module PILAS peut être par exemple un programme logiciel s'exécutant dans la mémoire du dispositif d'émulation, ou un ensemble matériel et logiciel. Le module PILAS peut, alternativement, se trouver sur un autre équipement du réseau local, ou sur un serveur externe.

Le dispositif d'émulation (C) comporte encore un module PILIP (PILotage des Interfaces Physiques) de pilotage de la communication entre les interfaces physiques du dispositif d'émulation et les diverses interfaces virtuelles sur les terminaux distants. Il est notamment chargé de lire les associations dans la table des associations et de contrôler en conséquence la communication entre une interface physique et une interface virtuelle (routage des messages, priorités, etc.)

Le terminal (T2-T5) comprend également des mémoires (M) associées à un processeur (CPU). Il communique sur le réseau local (9) via le module ETH (Ethernet). Tous ses modules communiquent entre eux via un bus de données (13). Le terminal représenté dans cet exemple comporte un ensemble d'interfaces virtuelles (VS1-VS4) correspondant aux normes USB, SD, NFC, SATA. Chacune de ces interfaces est représentée par un module logiciel (USB V, SD V, NFC V, SATA V). Une interface logicielle, que l'on appelle aussi indifféremment « interface virtuelle » dans la suite de cette demande est un module logiciel s'exécutant sur le terminal et présentant le même accès (au terminal) que le pilote logiciel d'une interface physique équivalente. En d'autres termes, ce module logiciel gère toutes les communications (en lecture et/ou écriture) avec le terminal comme s'il était un pilote logiciel d'une interface physique équivalente.

Le dispositif comporte aussi un module de gestion PILIV (PILotage des Interfaces Virtuelles) des diverses interfaces virtuelles, capable d'assurer l'association d'une interface virtuelle (logicielle) avec une interface physique sur le dispositif d'émulation (C). Le module PILIV accède aussi à la mémoire du terminal pour y créer, consulter, mettre à jour, les tables d'association qui lui permettent de connaître à un instant donné les interfaces virtuelles qui sont à sa disposition. Le module PILIV peut être par exemple un programme logiciel s'exécutant dans la mémoire du terminal.

### La figure 4 représente un mode de réalisation de l'invention

Dans cet exemple, les trois terminaux T2 (PC), T3 (passerelle domestique) et T4 (TV) ainsi que le dispositif d'émulation (C) selon l'invention sont connectés au réseau local (9) piloté par la passerelle. Conformément à la figure 2, le dispositif d'émulation (C) comporte quatre interfaces physiques (S1-S4). Il comporte en mémoire une table, schématisée en partie basse de la figure. Cette table (TIV - Table des Identifications Virtuelles), qui permet au dispositif de gérer les associations entre ses interfaces physiques et des interfaces virtuelles sur les différents terminaux, comporte pour chaque interface physique :
- une colonne *SRC* pour indiquer le terminal source qui porte physiquement l'interface (ici, elles se trouvent toutes sur le dispositif d'émulation C) ;
- une colonne *I*/*F(T)* pour indiquer la référence de l'interface physique, ainsi que son type (T), par exemple S1 (USB) pour l'interface physique 1 de type USB ;
- une colonne *(Ti)* par terminal (par exemple la colonne T2 pour le terminal 2) comportant la liste des interfaces virtuelles (VS1-VS4) du terminal, en association avec une interface physique (S1-S4).

Ainsi, selon cet exemple, les terminaux T3 et T4 disposent tous deux d'une interface virtuelle VS3 correspondant à l'interface physique numéro 3 (S3) sur le dispositif d'émulation. En d'autres termes, une carte physique SD insérée dans le compartiment SD du dispositif d'émulation devient accessible depuis la passerelle domestique (T3) et le TV (T4).

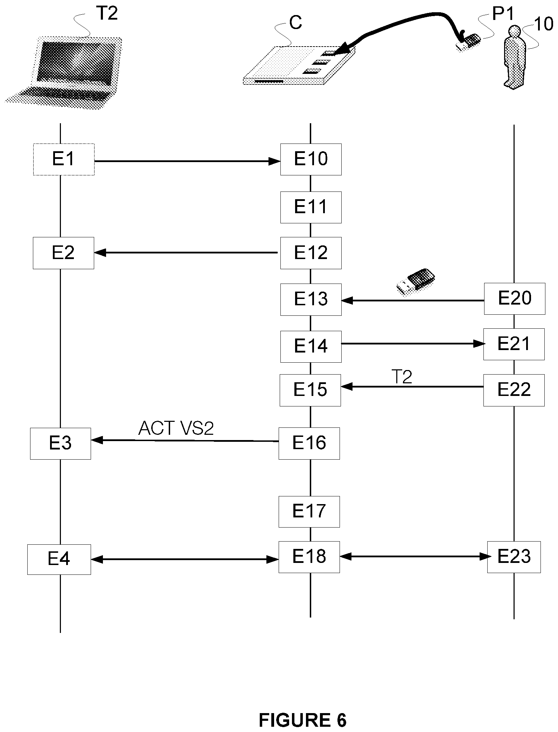

Pour aboutir à cette association, le dispositif d'émulation a enchaîné au préalable plusieurs étapes qui seront décrites plus tard à l'appui de la figure 6 :
• Découverte des terminaux disponibles dans le réseau ;
• Découverte des services et interfaces physiques proposés par chaque terminal ;
• Pré-association de pilotes virtuels aux différents terminaux (correspondant dans notre exemple à une initialisation en mémoire de la table TIV), pouvant aboutir à un tableau de la forme suivante :

**Table 1 : table des pré-associations (TAS)**

| *SRC*/*IF (T)* | *T2 (PC)* | *T3 (BOX)* | *T4 (TV)* |
|---|---|---|---|
| C/S1 (USB) | Oui | Oui | Oui |
| C/S2 (USB) | Oui | Oui | Non |
| C/S3 (SD) | Oui | Oui | Oui |
| C/S4 (NFC) | Non | Oui | Non |

A chaque fois qu'une case du tableau comprend la mention « oui », la phase de pré-association peut permettre d'installer sur le terminal le pilote virtuel correspondant : par exemple, le terminal T4 étant déclaré compatible avec les interfaces S1 et S3, les drivers virtuels correspondant à ces deux types d'interfaces (SD et USB) peuvent être installés sur le TV en prévision d'une association ultérieure.
- Gestion des pilotes logiciels, des versions des terminaux et mise à jour si nécessaire.
- Gestion de la table d'associations (TIV), par exemple sur intervention de l'utilisateur : si l'utilisateur demande une interface SD virtuelle sur son téléviseur (T4), le terminal T4, ayant été déclaré compatible, va pouvoir être associé à l'interface S3 du dispositif d'émulation.
- Gestion automatique de la table de qualité de service, à savoir optimisation des services en fonction de la bande passante disponible et priorisation des flux selon leur type.

Pour aboutir à cette association, dans notre exemple, un terminal a pour sa part enchaîné au préalable plusieurs étapes qui seront décrites plus tard à l'appui de la figure 6 :
- Annonce du terminal sur le réseau :
   ∘ Annonce des services, interfaces physiques, pilotes, etc. proposés par le terminal.
   ∘ Déclaration des périphériques physiques proposés par le terminal (disque dur, imprimante, etc.)
- Gestion des pilotes virtuels sur le terminal (installations, mises à jour, etc.)

### La figure 5 représente un autre mode de réalisation de l'invention

Cet exemple est très similaire à celui illustré par la figure 4, mais le dispositif d'émulation (C) selon l'invention utilise non seulement ses propres ports physiques mais aussi les ports physiques des terminaux : il peut prendre en charge le port USB physique du terminal 2 (T2, PC) et l'associer par la suite à un autre terminal, assurant donc le routage des données du port physique du terminal 2 vers le port virtuel du terminal 3.

La table TIV comporte une ligne supplémentaire pour indiquer l'association de l'interface physique A1 avec l'interface virtuelle VA1 sur le terminal T3.

La figure 6 représente un chronogramme des échanges entre un dispositif d'émulation et un terminal selon un mode de réalisation de l'invention.

Lors d'une étape E1, un terminal s'enregistre auprès du dispositif d'émulation (C) de l'invention, par exemple le PC 2 de la figure 1. Le terminal peut se manifester de manière automatique auprès du dispositif d'émulation afin de se faire enregistrer et de déclarer dynamiquement ses propres capacités (pilotes disponibles, interfaces physiques et périphériques connectés, etc.). Alternativement, les règles d'enregistrement peuvent être implicites. Par exemple, s'il n'existe qu'un seul terminal dans le réseau local, ou un terminal d'un seul type (PC, etc.), le dispositif d'émulation peut initier lui-même cette phase de découverte, afin de s'approprier les caractéristiques du ou des terminaux, et associer directement certains périphériques à certains terminaux. Par exemple, une clé USB peut être automatiquement associée au PC du réseau local, si celui-ci se trouve être le seul PC, ou à plusieurs PC du réseau local ; la manette de jeu peut être associée systématiquement à la STB, etc.

Le dispositif d'émulation reçoit la demande d'enregistrement lors d'une étape E10.

Lors d'une étape E11, le dispositif d'émulation construit une première table des associations possibles (TAS) entre le terminal et les ports physiques qui pourront lui être potentiellement associés. Une telle table peut se construire selon notre exemple de la manière suivante :
- Le dispositif d'émulation dispose de trois interfaces (S1, S2, S3) ;
- Il peut associer au terminal 2 qui vient de se déclarer l'interface S1 (USB), l'interface S2(USB), l'interface S3 (SD) bien que le terminal n'en dispose pas nativement, mais pas l'interface S4 (NFC).

On aboutit ainsi au tableau suivant, pour ce qui concerne le terminal 2 (T2):

**Table 2 : table des pré-associations pour le terminal 2**

| *SRC*/*IF (T)* | *I*/*F (T)* | *T2* |
|---|---|---|
| C/S1 (USB) | S1 (USB) | OUI |
| C/S2 (USB) | S2 (USB) | OUI |
| C/S3 (SD) | S3 (SD) | OUI |
| C/S4 (NFC) | S4 (NFC) | NON |

L'opération est répétée pour chaque terminal qui se déclare ou est découvert par le dispositif d'émulation, aboutissant ainsi à une table à plusieurs colonnes comme présenté auparavant.

Puis il renvoie éventuellement vers le terminal, lors d'une étape E12, le résultat des interfaces retenues pour une éventuelle association.

Sur réception de ce message, le terminal met à jour (étape E2) sa liste de pilotes supportés et d'interfaces physiques, afin d'accroître notamment la compatibilité matérielle du système. Par exemple, le terminal peut recevoir les informations suivantes :
- l'un de ses ports USB a été « virtualisé » sur le dispositif d'émulation, c'est-à-dire que toute connexion ultérieure d'une clé USB sur le port physique associé du dispositif d'émulation aboutira au même résultat qu'une connexion directe sur le port USB du terminal (se reporter à la figure 4).
- un nouveau port SD a été « virtualisé » sur le dispositif d'émulation c'est-à-dire que, bien que le terminal soit dépourvu nativement de port SD, tout se passera ultérieurement comme si le port SD associé du dispositif d'émulation se trouvait physiquement sur le PC.
- un nouveau port NFC a été «virtualisé» sur le *smartphone* de l'utilisateur du PC, c'est-à-dire que toute communication NFC ultérieure adressée au smartphone aboutira au PC de l'utilisateur.
- etc.

Lors d'une étape E20 ultérieure, l'utilisateur branche une clé USB sur l'un des ports physiques (S1, S2) du dispositif d'émulation.

Lors de l'étape E13, le dispositif d'émulation selon l'invention détecte le branchement de la clé USB sur l'une de ses interfaces (par exemple S2) et consulte sa table de pré-associations des interfaces (TAS). À la suite de cette opération, il peut proposer à l'utilisateur (E14) une interface graphique faisant apparaître l'ensemble des terminaux qui ont un port USB virtuel, dans notre exemple les terminaux 2 (PC), 3 (passerelle domestique) et 4 (TV). Cette étape est facultative car l'association, comme mentionné auparavant, peut être automatique.

Il faut noter que le dispositif d'émulation peut permettre à plusieurs terminaux clients d'accéder simultanément à un périphérique physique, et qu'il gère dans ce cas l'arbitrage.

Lors d'une étape E21, le client affiche les informations d'associations possibles sous forme d'une interface graphique proposant à l'utilisateur une liste d'associations possibles. Ce dernier peut choisir par une simple sélection (clic) l'association d'un dispositif physique avec un terminal donné.

Lors d'une étape E22, l'utilisateur choisit, par exemple via l'interface graphique, de connecter la clé USB à son PC (T2).

Cette information est reçue à l'étape E15 par le dispositif qui valide cette association et met à jour la table des associations (TIV) pour prendre en compte cette nouvelle association.

Lors d'une étape E16 qui peut lui être successive, le dispositif d'émulation prépare un acquittement pour le terminal concerné qui reçoit lors d'une étape E3 cette information lui indiquant que son interface virtuelle VS2 est désormais active et prête à fonctionner.

Lors d'une étape E17 qui peut lui être successive, le dispositif d'émulation prépare une table de qualité de service qui lui permet d'arbitrer les conflits potentiels entre les différents terminaux, notamment la priorité qui peut être affectée à certains d'entre eux (par exemple dans le cas où une interface USB est partagée) et la répartition de la bande passante.

Le dispositif d'émulation est en effet capable de diagnostiquer la route menant d'un périphérique physique à un hôte afin de prévoir la bande passante maximale disponible sur ce lien ; le serveur maintient une table de priorisation des flux et est ainsi capable de fournir une qualité de service (QoS) aux clients.

Lors d'une étape E18, le dispositif d'émulation reçoit une requête de lecture et/ou écriture en provenance du terminal (2) qui a demandé cette opération lors de l'étape E4. Lors de l'étape E18, une consultation de sa table des associations (TIV) permet au dispositif d'émulation de rediriger l'ordre de lecture (resp. écriture) vers l'interface associée au terminal 2, ici le port USB 2.

L'étape E23 correspond enfin à l'écriture ou à la lecture physique dans le dispositif USB, sous le contrôle du dispositif d'émulation (C).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Par exemple, un service distant dans le réseau large bande peut ainsi être identifié à la passerelle domestique, ou à l'un des terminaux du réseau, tout se passant dans ce cas grâce à l'invention comme si le service se trouvait dans le réseau local : par exemple, les données d'un utilisateur peuvent être sauvegardées sur un disque dur qui se trouve dans le réseau large bande alors qu'il semble physiquement connecté au PC de l'utilisateur, etc.

## Revendications

1. Procédé d'émulation d'une interface physique (S1-S4) associée à un type d'interface physique d'un dispositif d'émulation (C, T2) local à un utilisateur, apte à communiquer dans un réseau (9) avec une pluralité de terminaux distants du dispositif d'émulation, ladite interface physique (S1-S4) étant apte à recevoir au moins un équipement périphérique (P1, P7, P6), le procédé étant **caractérisé en ce qu'**il comporte les étapes suivantes sur le dispositif d'émulation, dans le but d'échanger des messages entre l'interface physique (S1-S4) du dispositif d'émulation (C, T2) et au moins un terminal (T3) de la pluralité, de manière à simuler la connexion de l'équipement périphérique sur ledit au moins un terminal:
- pré-association (E11) pour établir un ensemble d'associations possibles (TAS, S3/T3, S3/T4, S1/T2), pour au moins une |interface physique (S1-S4, A1) du dispositif d'émulation (C, T2),) entre ladite interface physique (S1-S4) et au moins une interface logicielle (VA1, VS1-VS4) d'au moins un terminal (T1-T4) distant de la pluralité, ladite association étant déclarée possible si le terminal dispose d'une interface du même type que ladite interface physique ;
- pré-association d'un pilote virtuel audit terminal, correspondant audit type d'interface, la dite pré-association permettant d'installer sur ledit terminal ledit pilote virtuel ;
- et, lorsque l'équipement périphérique est connecté à l'interface physique du dispositif d'émulation :
- sélection (E13-E14) d'un terminal distant parmi les terminaux distants de la pluralité, en fonction de l'ensemble des associations possibles ;
- sélection (E15-E16) d'une association (S3/T3) entre ladite interface physique (S1-S4) et au moins une interface logicielle (VS1-VS4) dudit terminal sélectionné (T3), parmi toutes les associations possibles (S3/T3, S3/T4) pour ladite |interface physique (S1-S4) du dispositif d'émulation sur ledit terminal (T3) ;
- routage des messages (E18) entre ladite interface physique (S1-S4) du dispositif d'émulation et l'interface logicielle associée (VS1-VS4) sur ledit terminal sélectionné de manière à assurer une communication bidirectionnelle (E18) entre les deux interfaces (S1-S4, VS1-VS4).

2. Procédé d'émulation selon la revendication 1, **caractérisé en ce que** l'étape de pré-association (E11) est précédée d'une étape de déclaration (E10) d'au moins un terminal de la pluralité (T2-T5) auprès du dispositif (C).

3. Procédé d'émulation selon la revendication 1, **caractérisé en ce que** l'étape de pré-association (E11) est suivie d'une étape (E17) de gestion des priorités.

4. Procédé d'émulation selon la revendication 1, **caractérisé en ce que** l'étape de sélection d'un terminal distant sélectionne automatiquement le terminal si une association de l'une de ses interfaces logicielles à l'interface physique est la seule possible à l'issue de l'étape de pré-association.

5. Procédé d'émulation selon la revendication 1, **caractérisé en ce que** l'étape de sélection d'un terminal est proposée à l'utilisateur via une interface homme-machine.

6. Dispositif d'émulation (C) local à un utilisateur comportant un module de communication (ETH) apte à communiquer dans un réseau (9) avec une pluralité de terminaux distants du dispositif d'émulation, **caractérisé en ce qu'**il comporte les modules suivants pour échanger des messages entre au moins une interface physique (S1-S4) du dispositif d'émulation (C, T2) associée à un type d'interface physique et apte à recevoir un équipement périphérique (P1, P7, P6), et au moins un terminal (T3) de la pluralité, de manière à simuler la connexion du périphérique sur ledit au moins un terminal :
- un module d'accès à au moins une interface physique (S1-S4) apte à recevoir au moins un équipement périphérique (P1, P7, P6) ;
- un module de pré-association (PILAS) pour établir un ensemble d'associations possibles (TAS, S3/T3, S3/T4, S1/T2), pour au moins une |interface physique (S1-S4, A1) du dispositif d'émulation (C, T2), entre ladite interface physique (S1-S4) et au moins une interface logicielle (VA1, VS1-VS4) d'au moins un terminal (T1-T4) distant de la pluralité, ladite association étant déclarée possible si le terminal dispose d'une interface du même type que ladite interface physique ;
- un module de pré-association d'un pilote virtuel audit terminal, correspondant audit type d'interface, la dite pré-association permettant d'installer sur ledit terminal ledit pilote virtuel ;
- un module pour détecter que l'équipement périphérique est connecté à l'interface physique du dispositif d'émulation ;
- un module de sélection d'un terminal distant parmi les terminaux distants de la pluralité, en fonction de l'ensemble des associations possibles ;
- un module de sélection (PILAS) d'une association (S3/T3) entre ladite interface physique (S1-S4) et au moins une interface logicielle (VS1-VS4) du terminal sélectionné (T3), parmi toutes les associations possibles (VS3/T3, VS3/T4) pour ladite interface physique (S1-S4) du dispositif d'émulation sur ledit terminal ;
- un module de gestion des interfaces (PILIP) apte à assurer le routage des messages (E18) entre ladite interface physique (S1-S4) du dispositif d'émulation et l'interface logicielle associée (VS1-VS4) sur ledit terminal sélectionné, de manière à assurer une communication bidirectionnelle (E18) entre les deux interfaces (SI-S4, VS1-VS4).

7. Passerelle de service (T3) comportant un dispositif d'émulation (C) selon la revendication 6.

8. Système de communication incluant un dispositif d'émulation local à un utilisateur comportant un module de communication (ETH) apte à communiquer avec une pluralité de terminaux distants du dispositif d'émulation (T2-T5) au travers d'un réseau (9) dans le but d'échanger des messages entre au moins une interface physique (S1-S4) du dispositif d'émulation associée à un type d'interface physique et apte à recevoir un équipement périphérique (P1, P7, P6), et au moins un terminal (T1-T4) de la pluralité, de manière à simuler la connexion de l'équipement périphérique sur ledit au moins un terminal, **caractérisé en ce que** :
- le dispositif d'émulation (C) comporte en outre :
- un module d'accès à au moins une interface physique (S1-S4) apte à recevoir au moins un équipement périphérique (P1, P7, P6) ;
- un module de pré-association (PILAS) pour établir un ensemble d'associations possibles (TAS, S3/T3, S3/T4, S1/T2), pour au moins une interface physique (S1-S4, A1) du dispositif d'émulation (C, T2), entre ladite interface physique (S1-S4) et au moins une interface logicielle (VA1, VS1-VS4) d'au moins un terminal (T1-T4) distant de la pluralité, ladite association étant déclarée possible si le terminal dispose d'une interface du même type que ladite interface physique;
- un module de pré-association d'un pilote virtuel audit terminal, correspondant audit type| d'interface, la dite pré-association permettant d'installer sur ledit terminal ledit pilote virtuel ;
- un module pour détecter que l'équipement périphérique est connecté à l'interface physique du dispositif d'émulation ;
- un module de sélection d'un terminal distant parmi les terminaux distants de la pluralité, en fonction de l'ensemble des associations possibles ;
- un module de sélection (PILAS) d'une association (S3/T3) entre ladite interface physique (S1-S4) et au moins une interface logicielle (VS3/T3) du terminal sélectionné (T3), parmi toutes les associations possibles (VS3/T3, VS3/T4) pour ladite interface physique (S1-S4) du dispositif d'émulation sur ledit terminal ;
- un module de gestion des interfaces (PILIP) apte à assurer le routage des messages (E18) entre ladite interface physique (S1-S4) du dispositif d'émulation et l'interface logicielle associée (VS1-VS4) sur ledit terminal sélectionné, de manière à assurer une communication bidirectionnelle (E18) entre les deux interfaces (S1-S4, VS1-VS4).
- ledit au moins un terminal de la pluralité (T2) comportant :
- une interface logicielle (VS1-VS4, USB_V, NFC_V).
- un module de mise à jour (PILIV) d'une association entre une interface logicielle (VS1-VS4) et une interface physique externe (SI-S4) comprenant un sous-module de mise à jour ou d'installation d'un pilote virtuel pour ladite interface logicielle ;
- un module d'activation (PILIV) de l'interface logicielle (VS2) ;
- un module de gestion (PILIV) d'au moins une interface logicielle (VS1-VS4, USB_V) apte à faire communiquer l'interface logicielle activée avec une interface physique externe.

9. Programme d'ordinateur comportant des instructions de code pour la mise en œ uvre du procédé d'émulation conforme à la revendication 1, lorsque celle-ci est exécutée par un processeur.

## Patentansprüche

1. Verfahren zum Emulieren einer physikalischen Schnittstelle (S1-S4), die einem Typ einer physikalischen Schnittstelle einer lokalen Emulationsvorrichtung (C, T2) bei einem Anwender zugeordnet ist und in einem Netz (9) mit einer Mehrzahl von von der Emulationsvorrichtung entfernten Endgeräten kommunizieren kann, wobei die physikalische Schnittstelle (S1-S4) wenigstens ein Peripheriegerät (P1, P7, P6) aufnehmen kann, wobei das Verfahren **dadurch gekennzeichnet ist, dass** es die folgenden Schritte in der Emulationsvorrichtung, die das Ziel haben, Nachrichten zwischen der physikalischen Schnittstelle (S1-S4) der Emulationsvorrichtung (C, T2) und wenigstens einem Endgerät (T3) der Mehrzahl in der Weise auszutauschen, dass der Anschluss des Peripheriegeräts an dem wenigstens einen Endgerät simuliert wird, umfasst:
- vorheriges Zuordnen (E11), um eine Gesamtheit möglicher Zuordnungen (TAS, S3/T3, S3/T4, S1/T2) für wenigstens eine physikalische Schnittstelle (S1-S4, A1) der Emulationsvorrichtung (C, T2) zwischen dieser physikalischen Schnittstelle (S1-S4) und wenigstens einer Software-Schnittstelle (VA1, VS1-VS4) wenigstens eines entfernten Endgeräts (T1-T4) der Mehrzahl zu erstellen, wobei die Zuordnung für möglich erklärt wird, falls das Endgerät über eine Schnittstelle desselben Typs wie die physikalische Schnittstelle verfügt;
- vorheriges Zuordnen eines virtuellen Steuerprogramms zu dem Endgerät, das dem Schnittstellentyp entspricht, wobei dieses vorherige Zuordnen ermöglicht, das virtuelle Steuerprogramm in dem Endgerät zu installieren;
- und, falls das Peripheriegerät an die physikalische Schnittstelle der Emulationsvorrichtung angeschlossen ist:
- Auswählen (E13-E14) eines entfernten Endgeräts aus den entfernten Endgeräten der Mehrzahl als Funktion der Gesamtheit möglicher Zuordnungen;
- Auswählen (E15-E16) einer Zuordnung (S3/T3) zwischen der physikalischen Schnittstelle (S1-S4) und wenigstens einer Software-Schnittstelle (VS1-VS4) des ausgewählten Endgeräts (T3) aus allen möglichen Zuordnungen (S3/T3, S3/T4) für die physikalische Schnittstelle (S1-S4) der Emulationsvorrichtung in dem Endgerät (T3);
- Leiten von Nachrichten (E18) zwischen der physikalischen Schnittstelle (S1-S4) der Emulationsvorrichtung und der zugeordneten Software-Schnittstelle (VS1-VS4) in dem ausgewählten Endgerät, derart, dass eine bidirektionale Kommunikation (E18) zwischen den beiden Schnittstellen (S1-S4, VS1-VS4) sichergestellt ist.

2. Emulationsverfahren nach Anspruch 1, **dadurch gekennzeichnet, dass** dem Schritt (E11) des vorherigen Zuordnens ein Schritt (E10) des Erklärens, dass sich wenigstens ein Endgerät der Mehrzahl (T2-T5) in der Nähe der Vorrichtung (C) befindet, vorhergeht.

3. Emulationsverfahren nach Anspruch 1, **dadurch gekennzeichnet, dass** dem Schritt (E11) des vorherigen Zuordnens ein Schritt (E17) des Verwaltens von Prioritäten folgt.

4. Emulationsverfahren nach Anspruch 1, **dadurch gekennzeichnet, dass** der Schritt des Auswählens eines entfernten Endgeräts am Ende des Schrittes des vorherigen Zuordnens automatisch das Endgerät auswählt, falls eine Zuordnung einer seiner Software-Schnittstellen zu der physikalischen Schnittstelle die einzig mögliche ist.

5. Emulationsverfahren nach Anspruch 1, **dadurch gekennzeichnet, dass** der Schritt des Auswählens eines Endgeräts dem Anwender über eine Mensch/Maschine-Schnittstelle vorgeschlagen wird.

6. Lokale Emulationsvorrichtung (C) bei einem Anwender, die ein Kommunikationsmodul (ETH) umfasst, das in einem Netz (9) mit einer Mehrzahl von von der Emulationsvorrichtung entfernten Endgeräten kommunizieren kann, **dadurch gekennzeichnet, dass** sie die folgenden Module umfasst, um Nachrichten zwischen wenigstens einer physikalischen Schnittstelle (S1-S4) der Emulationsvorrichtung (C, T2), die einem Typ einer physikalischen Schnittstelle zugeordnet ist und ein Peripheriegerät (P1, P7, P6) aufnehmen kann, und wenigstens einem Endgerät (T3) der Mehrzahl in der Weise auszutauschen, dass der Anschluss des Peripheriegeräts an dem wenigstens einen Endgerät simuliert wird:
- ein Modul für den Zugriff auf wenigstens eine physikalische Schnittstelle (S1-S4), die wenigstens ein Peripheriegerät (P1, P7, P6) aufnehmen kann;
- ein Vorzuordnungsmodul (PILAS), um eine Gesamtheit möglicher Zuordnungen (TAS, S3/T3, S3/T4, S1/T2) für wenigstens eine physikalische Schnittstelle (S1-S4, A1) der Emulationsvorrichtung (C, T2) zwischen der physikalischen Schnittstelle (S1-S4) und wenigstens einer Software-Schnittstelle (VA1, VS1-VS4) wenigstens eines entfernten Endgeräts (T1-T4) der Mehrzahl herzustellen, wobei die Zuordnung als möglich erklärt wird, falls das Endgerät über eine Schnittstelle desselben Typs wie die physikalische Schnittstelle verfügt;
- ein Modul zum vorherigen Zuordnen eines virtuellen Steuerprogramms zu dem Endgerät entsprechend dem Schnittstellentyp, wobei die vorherige Zuordnung ermöglicht, das virtuelle Steuerprogramm in dem Endgerät zu installieren;
- ein Modul zum Detektieren, dass das Peripheriegerät an die physikalische Schnittstelle der Emulationsvorrichtung angeschlossen ist;
- ein Modul zum Auswählen eines entfernten Endgeräts aus den entfernten Endgeräten der Mehrzahl als Funktion der Gesamtheit möglicher Zuordnungen;
- ein Modul (PILAS) zum Auswählen einer Zuordnung (S3/T3) zwischen der physikalischen Schnittstelle (S1-S4) und wenigstens einer Software-Schnittstelle (VS1-VS4) des ausgewählten Endgeräts (T3) aus allen möglichen Zuordnungen (VS3/T3, VS3/T4) für die physikalische Schnittstelle (S1-S4) der Emulationsvorrichtung in dem Endgerät;
- ein Modul (PILIP) zum Verwalten von Schnittstellen, das das Lenken von Nachrichten (E18) zwischen der physikalischen Schnittstelle (S1-S4) der Emulationsvorrichtung und der zugeordneten Software-Schnittstelle (VS1-VS4) in dem ausgewählten Endgerät sicherstellen kann, derart, dass eine bidirektionale Kommunikation (E18) zwischen den beiden Schnittstellen (SI-S4, VS1-VS4) sichergestellt wird.

7. Dienst-Gateway (T3), das eine Emulationsvorrichtung (C) nach Anspruch 6 enthält.

8. Kommunikationssystem, das eine lokale Emulationsvorrichtung bei einem Anwender enthält, die ein Kommunikationsmodul (ETH) enthält, das mit mehreren von der Emulationsvorrichtung (T2-T5) entfernten Endgeräten über ein Netz (9) kommunizieren kann, mit dem Ziel, Nachrichten zwischen wenigstens einer physikalischen Schnittstelle (S1-S4) der Emulationsvorrichtung, die einem Typ einer physikalischen Schnittstelle zugeordnet ist und ein Peripheriegerät (P1, P7, P6) aufnehmen kann, und wenigstens einem Endgerät (T1-T4) der Mehrzahl auszutauschen, derart, dass der Anschluss des Peripheriegeräts an das wenigstens eine Endgerät simuliert wird, **dadurch gekennzeichnet, dass**:
- die Emulationsvorrichtung (C) außerdem Folgendes umfasst:
- ein Modul für den Zugriff auf wenigstens eine physikalische Schnittstelle (S1-S4), die wenigstens ein Peripheriegerät (P1, P7, P6) aufnehmen kann;
- ein Vorzuordnungsmodul (PILAS) zum Herstellen einer Gesamtheit möglicher Zuordnungen (TAS, S3/T3, S3/T4, S1/T2) für wenigstens eine physikalische Schnittstelle (S1-S4, A1) der Emulationsvorrichtung (C, T2) zwischen der physikalischen Schnittstelle (S1-S4) und wenigstens einer Software-Schnittstelle (VA1,VS1-VS4) wenigstens eines entfernten Endgeräts (T1-T4) der Mehrzahl, wobei die Zuordnung als möglich erklärt wird, falls das Endgerät über eine Schnittstelle desselben Typs wie die physikalische Schnittstelle verfügt;
- ein Modul zum vorherigen Zuordnen eines virtuellen Steuerprogramms zu dem Endgerät, das dem Schnittstellentyp entspricht, wobei die vorherige Zuordnung ermöglicht, das virtuelle Steuerprogramm in dem Endgerät zu installieren;
- ein Modul zum Detektieren, dass das Peripheriegerät an die physikalische Schnittstelle der Emulationsvorrichtung angeschlossen ist;
- ein Modul zum Auswählen eines entfernten Endgeräts aus den entfernten Endgeräten der Mehrzahl als Funktion der Gesamtheit möglicher Zuordnungen;
- ein Modul (PILAS) zum Auswählen einer Zuordnung (S3/T3) zwischen der physikalischen Schnittstelle (S1-S4) und wenigstens einer Software-Schnittstelle (VS3/T3) des ausgewählten Endgeräts (T3) aus allen möglichen Zuordnungen (VS3/T3, VS3/T4) für die physikalische Schnittstelle (S1-S4) der Emulationsvorrichtung in dem Endgerät;
- ein Modul (PILIP) zum Verwalten von Schnittstellen, das das Lenken von Nachrichten (E18) zwischen der physikalischen Schnittstelle (S1-S4) der Emulationsvorrichtung und der zugeordneten Software-Schnittstelle (VS1-VS4) in dem ausgewählten Endgerät sicherstellen kann, derart, dass eine bidirektionale Kommunikation (E18) zwischen den beiden Schnittstellen (S1-S4, VS1-VS4) sichergestellt wird;
- wobei das wenigstens eine Endgerät (T2) der Mehrzahl Folgendes umfasst:
- eine Software-Schnittstelle (VS1-VS4, USB_V, NFC_V);
- ein Modul (PILIV) zum Aktualisieren einer Zuordnung zwischen einer Software-Schnittstelle (VS1-VS4) und einer externen physikalischen Schnittstelle (SI-S4), das ein Untermodul für die Aktualisierung oder Installation eines virtuellen Steuerprogramms für die Software-Schnittstelle enthält;
- ein Modul (PILIV) zum Aktivieren der Software-Schnittstelle (VS2);
- ein Modul (PILIV) zum Verwalten wenigstens einer Software-Schnittstelle (VS1-VS4, USB_V), die eine Kommunikation zwischen der aktivierten Software-Schnittstelle und einer externen physikalischen Schnittstelle ausführen kann.

9. Computerprogramm, das Codebefehle enthält, das Emulationsverfahren nach Anspruch 1 auszuführen, wenn es von einem Prozessor ausgeführt wird.

## Claims

1. Method for emulation of a physical interface (S1-S4) associated with a type of physical interface of an emulation device (C, T2) local to a user, which is capable of communicating within a network (9) with a plurality of terminals remote from the emulation device, said physical interface (S1-S4) being capable of receiving at least one peripheral equipment (P1, P7, P6), the method being **characterized in that** it comprises the following steps at the emulation device, for the purpose of exchanging messages between the physical interface (S1-S4) of the emulation device (C, T2) and at least one terminal (T3) of the plurality so as to simulate the connection of the peripheral equipment to said at least one terminal:
- pre-association (E11) for establishing a set of possible associations (TAS, S3/T3, S3/T4, S1/T2), for at least one physical interface (S1-S4, A1) of the emulation device (C, T2), between said physical interface (S1-S4) and at least one software interface (VA1, VS1-VS4) of at least one remote terminal (T1-T4) of the plurality, said association being declared possible if the terminal has an interface of the same type as said physical interface;
- pre-association of a virtual driver, corresponding to said type of interface, with said terminal, said pre-association allowing said virtual driver to be installed on said terminal;
- and, when the peripheral equipment is connected to the physical interface of the emulation device:
- selection (E13-E14) of a remote terminal from among the remote terminals of the plurality on the basis of the set of possible associations;
- selection (E15-E16) of an association (S3/T3) between said physical interface (S1-S4) and at least one software interface (VS1-VS4) of said selected terminal (T3), from among all the possible associations (S3/T3, S3/T4) for said physical interface (S1-S4) of the emulation device at said terminal (T3);
- routing (E18) of the messages between said physical interface (S1-S4) of the emulation device and the associated software interface (VS1-VS4) at said selected terminal so as to provide for bidirectional communication (E18) between the two interfaces (S1-S4, VS1-VS4).

2. Emulation method according to Claim 1, **characterized in that** the pre-association step (E11) is preceded by a step (E10) of declaration of at least one terminal of the plurality (T2-T5) to the device (C).

3. Emulation method according to Claim 1, **characterized in that** the pre-association step (E11) is followed by a step (E17) of management of the priorities.

4. Emulation method according to Claim 1, **characterized in that** the step of selection of a remote terminal automatically selects the terminal if an association of one of the software interfaces thereof with the physical interface is the only one possible following the pre-association step.

5. Emulation method according to Claim 1, **characterized in that** the step of selection of a terminal is offered to the user via a human-machine interface.

6. Emulation device (C) local to a user, comprising a communication module (ETH) capable of communicating within a network (9) with a plurality of terminals remote from the emulation device, **characterized in that** it comprises the following modules for exchanging messages between at least one physical interface (S1-S4) of the emulation device (C, T2), which is associated with a type of physical interface and is capable of receiving a peripheral equipment (P1, P7, P6), and at least one terminal (T3) of the plurality so as to simulate the connection of the peripheral device to said at least one terminal:
- a module for accessing at least one physical interface (S1-S4) capable of receiving at least one peripheral equipment (P1, P7, P6);
- a pre-association module (PILAS) for establishing a set of possible associations (TAS, S3/T3, S3/T4, S1/T2), for at least one physical interface (S1-S4, A1) of the emulation device (C, T2), between said physical interface (S1-S4) and at least one software interface (VA1, VS1-VS4) of at least one remote terminal (T1-T4) of the plurality, said association being declared possible if the terminal has an interface of the same type as said physical interface;
- a module for pre-associating a virtual driver, corresponding to said type of interface, with said terminal, said pre-association allowing said virtual driver to be installed on said terminal;
- a module for detecting that the peripheral equipment is connected to the physical interface of the emulation device;
- a module for selecting a remote terminal from among the remote terminals of the plurality on the basis of the set of possible associations;
- a module (PILAS) for selecting an association (S3/T3) between said physical interface (S1-S4) and at least one software interface (VS1-VS4) of the selected terminal (T3), from among all the possible associations (VS3/T3, VS3/T4) for said physical interface (S1-S4) of the emulation device at said terminal;
- a module (PILIP) for managing the interfaces, which is capable of providing for the routing (E18) of the messages between said physical interface (S1-S4) of the emulation device and the associated software interface (VS1-VS4) at said selected terminal so as to provide for bidirectional communication (E18) between the two interfaces (SI-S4, VS1-VS4).

7. Service gateway (T3) comprising an emulation device (C) according to Claim 6.

8. Communication system including an emulation device local to a user, comprising a communication module (ETH) capable of communicating with a plurality of terminals remote from the emulation device (T2-T5) over a network (9), for the purpose of exchanging messages between at least one physical interface (S1-S4) of the emulation device, which is associated with a type of physical interface and is capable of receiving a peripheral equipment (P1, P7, P6), and at least one terminal (T1-T4) of the plurality so as to simulate the connection of the peripheral equipment to said at least one terminal, **characterized in that**:
- the emulation device (C) further comprises:
- a module for accessing at least one physical interface (S1-S4) capable of receiving at least one peripheral equipment (P1, P7, P6);
- a pre-association module (PILAS) for establishing a set of possible associations (TAS, S3/T3, S3/T4, S1/T2), for at least one physical interface (S1-S4, A1) of the emulation device (C, T2), between said physical interface (S1-S4) and at least one software interface (VA1, VS1-VS4) of at least one remote terminal (T1-T4) of the plurality, said association being declared possible if the terminal has an interface of the same type as said physical interface;
- a module for pre-associating a virtual driver, corresponding to said type of interface, with said terminal, said pre-association allowing said virtual driver to be installed on said terminal;
- a module for detecting that the peripheral equipment is connected to the physical interface of the emulation device;
- a module for selecting a remote terminal from among the remote terminals of the plurality on the basis of the set of possible associations;
- a module (PILAS) for selecting an association (S3/T3) between said physical interface (S1-S4) and at least one software interface (VS3/T3) of the selected terminal (T3), from among all the possible associations (VS3/T3, VS3/T4) for said physical interface (S1-S4) of the emulation device at said terminal;
- a module (PILIP) for managing the interfaces, which is capable of providing for the routing (E18) of the messages between said physical interface (S1-S4) of the emulation device and the associated software interface (VS1-VS4) at said selected terminal so as to provide for bidirectional communication (E18) between the two interfaces (S1-S4, VS1-VS4);
- said at least one terminal (T2) of the plurality comprising:
- a software interface (VS1-VS4, USB_V, NFC_V);
- a module (PILIV) for updating an association between a software interface (VS1-VS4) and an external physical interface (SI-S4), comprising a sub-module for updating or installing a virtual driver for said software interface;
- a module (PILIV) for activating the software interface (VS2);
- a module (PILIV) for managing at least one software interface (VS1-VS4, USB_V) capable of causing the activated software interface to communicate with an external physical interface.

9. Computer program comprising code instructions for the implementation of the emulation method according to Claim 1, when it is executed by a processor.
